# EUROPÄISCHE PATENTANMELDUNG

(11) **EP 1 203 981 A1**
(43) Veröffentlichungstag der Anmeldung: **08.05.2002**
(21) Anmeldenummer: 01126021.3
(22) Anmeldetag: 31.10.2001
(51) Int. Cl.: G03B 15/16

(54) **Fotokamera und fotografisches Verfahren**

(30) Priorität: 31.10.2000 DE 10054096
(71) Anmelder: Gorr, Harald, Dr., 37293 Herleshausen (DE)
(72) Erfinder: Gorr, Harald, Dr., 37293 Herleshausen (DE)
(74) Vertreter: Beck, Michael Rudolf

(57) **Zusammenfassung**

Eine Fotokamera (1) umfaßt ein Objektiv zur Projektion einfallenden Lichtes auf eine Bildfläche, eine Blendeneinrichtung, die zwischen dem Objektiv und der Bildfläche angeordnet ist, wobei die Blendeneinrichtung einen spaltförmigen Belichtungsschlitz aufweist, eine Antriebseinrichtung, die mit der Blendeneinrichtung derart gekoppelt ist, um den spaltförmigen Belichtungsschlitz über die Bildfläche zu bewegen, eine Steuereinrichtung (26) zur Vorgabe von Kameraparametern, welche ein aufgenommenes Bild beeinflussen, und zur automatischen Veränderung der Kameraparameter während der Bewegung des spaltförmigen Belichtungsschlitzes über die Bildfläche, und Einrichtungen (27 bis 32) zur automatischen Einstellung dieser Parameter an der Fotokamera (1). Weiterhin wird ein entsprechendes fotografisches Verfahren angegeben. Damit wird bei der verhältnismäßig langsam ablaufenden Aufnahme eine Anpassung an den aufzunehmenden Gegenstand, die Szene oder einen dynamischen Vorgang ermöglicht und die Bildqualität verbessert.

## Beschreibung

Die Erfindung bezieht sich auf eine Fotokamera und weiterhin auf ein fotografisches Verfahren, die bzw. das sich sowohl zur Aufnahme von dynamischen Vorgängen als auch zur Aufnahme von statischen Gegenständen oder Szenen eignet. Insbesondere betrifft die Erfindung eine Fotokamera mit einem Objektiv zur Projektion einfallenden Lichtes auf eine Bildfläche sowie einer Blendeneinrichtung, die zwischen dem Objektiv und der Bildfläche angeordnet ist, wobei die Blendeneinrichtung einen spaltförmigen Belichtungsschlitz aufweist.

Mit herkömmlichen Fotokameras können dynamische Vorgänge wie z.B. das Bewegungsverhalten einer Person oder eines Gegenstandes auf unterschiedliche Art und Weise auf ein lichtempfindliches Medium abgebildet werden. Einerseits lassen sich Bewegungen durch die Wahl einer sehr kurzen Verschlußzeit, z.B. 1/500 s, einfrieren. Die konturenscharfe Abbildung, beispielsweise ein Foto, ist dann eine Momentaufnahme, die keine weiteren Informationen über die Bewegungsrichtung und -geschwindigkeit des fotografierten Objektes enthält.

Andererseits kann durch die Wahl einer langsamen Verschlußzeit, z.B. 1/15 s, eine Bewegungsunschärfe erzeugt werden, so daß ein sich bewegendes Objekt verwischt abgebildet wird. Eine konturenscharfe Abbildung wird nun zwar nicht erreicht. Es lassen sich jedoch aus der Stärke und dem Verlauf der "Verwischung" in begrenztem Maße Informationen über die Bewegungsrichtung und -geschwindigkeit des Objektes ableiten.

Durch Mitziehen der Kamera in Bewegungsrichtung des sich bewegenden Objektes kann beim Fotografieren mit langsamer Verschlußzeit das Objekt selbst scharf abgebildet werden. Allerdings werden dann alle statischen Bildteile, z.B. ein ruhender Hintergrund oder auch mit anderer Geschwindigkeit bewegte Objekte verwischt wiedergegeben.

Konturenscharfe Abbildungen von sich bewegenden Objekten, die eine exakte Analyse eines dynamischen Vorganges im Hinblick auf die Bewegungsgeschwindigkeit und -richtung des bewegten Objekts relativ zu anderen statischen oder dynamischen Bildteilen enthalten, sind mit herkömmlichen Fotokameras nicht möglich. Diese verwenden zumeist einen Rollschlitzverschluß, dessen Öffnungskanten nacheinander ausgelöst und getrennt voneinander über die Bildfläche bewegt werden. Sollen nun die Bewegungen verhältnismäßig langsamer Objekte analysiert werden, beispielsweise die Schrittfolge eines Fußgängers, so sind kurze Verschlußzeiten ungeeignet, da lediglich ein sehr kurzer Moment der Bewegung erfaßt wird und dementsprechend eine Vielzahl von Aufnahmen zur Darstellung des Bewegungsablaufes nötig sind. Zur genauen Analyse der einzelnen Bewegungsphasen müssen die einzelnen Bilder im Kontext möglichst übereinander betrachtet werden. Dies ist bei einer Vielzahl von Einzelbildern jedoch schwierig.

Eine Möglichkeit besteht in der Verwendung längerer Verschlußzeiten. Bei längeren Verschlußzeiten wird jedoch für einen gewissen Zeitraum die gesamte Bildfläche belichtet, d.h. der Abstand der Öffnungskanten des Rollschlitzverschlusses entspricht dann der Breite der Bildfläche. Hierbei macht sich allerdings der oben erläuterte Verwischeffekt störend bemerkbar, so daß eine genaue Bildanalyse nicht möglich ist. Überdies bestehen Einschränkungen hinsichtlich der Gesamtbelichtungszeit, die u.a. aus der Lichtempfindlichkeit des Aufzeichnungsmediums resultieren. Bei langen Belichtungszeiten und höherer Empfindlichkeit kommt es zu Überbelichtungseffekten, welche die Analysierbarkeit des Bildes beeinträchtigen. Bei Verwendung einer geringeren Empfindlichkeit ist hingegen die Helligkeit und damit die Erkennbarkeit des bewegten Objektes vermindert.

Es existieren auch Fotokameras, bei denen einzelne Teile eines späteren Gesamtbildes nacheinander auf einer Bildfläche abgebildet werden. Genaugenommen arbeitet auch jeder einstellbare Rollschlitzverschluß an einer Kamera nach diesem Verfahren, wenn an dieser eine kürzere Belichtungszeit als die Blitzsynchronzeit, i.d.R. 1/60 s bis 1/250 s, eingestellt wird. Benötigen die Öffnungskanten des Verschlusses z.B. 1/250 s zum Überstreichen der Breite der Bildfläche, so muß für eine Verschlußzeit von 1/1000 s zwischen den Öffnungskanten ein Abstand von einem Viertel der Bildflächenbreite eingestellt werden. Ein solcher Abstand ist für das spätere Bildergebnis jedoch ohne erkennbaren Einfluß. Lediglich in der Hochgeschwindigkeitsfotografie ergeben sich bei sich sehr schnell bewegenden Objekten aufgrund des hierbei notwendigen, relativ schmalen Belichtungsspaltes größenverzogene Abbildungen und Bildunschärfen, die dort allerdings unerwünscht sind.

Eine Fotokamera der eingangs genannten Art ist aus der DE 41 39 890 A1 bekannt, die jedoch vorwiegend für Panoramaaufnahmen und amorphe Fotografien eingesetzt wird. Bei dieser wird ein Film kontinuierlich an einer zuschaltbaren, feststehenden Maske vorbeigeführt, die einen Belichtungsschlitz aufweist. Die Maske besitzt dabei keine Verschlußfunktion. Die Spaltbreite des Belichtungsschlitzes liegt zwischen 0,5 mm und 0,1 mm. In Kombination mit einer gegenläufigen Bewegungseinrichtung für die Kamera können große Bildwinkel verzerrungsfrei abgebildet werden. Weiterhin wird in der DE 41 39 890 A1 vorgeschlagen, eine solche Kamera zur Aufnahme bewegter Objekte zu verwenden, wobei die Kamera stationär bleibt, so daß diese Objekte gedehnt oder gestaucht wiedergegeben werden. Dies wird in der DE 41 39 890 A1 jedoch lediglich unter dem Gesichtspunkt einer effektvollen Bildgestaltung gesehen. Eine quantitative Analyse der Bewegungen im Raum ist nicht möglich, da sämtliche statischen Bildteile verwischt wiedergegeben werden. Zudem ist diese bekannte Kamera technisch aufwendig und großvolumig. So müssen beispielsweise der Filmtransport und die Öffnung des eigentlichen Kameraverschlusses synchronisiert werden.

Weiterhin ist aus der EP 0 549 436 A1 eine Fotokamera für die Zielfotografie bekannt. Bei dieser Kamera wird jeweils nur ein kleiner Lichtspalt belichtet, der exakt auf die Ziellinie ausgerichtet ist. Beim Zieleinlauf z.B. eines Pferderennens wird ein Film in entgegengesetzter Richtung der sich bewegenden Objekte an dem Belichtungsschlitz vorbeitransportiert. Anhand des hierbei entstandenen Zielfilms läßt sich erkennen, wer als erster die Ziellinie berührt oder überschritten hat.

Bei den vorstehend beschriebenen Kameras bzw. Aufnahmeverfahren wird eine relativ scharfe Abbildung der sich bewegenden Objekte angestrebt. Durch die auf die relativ hohe Transportgeschwindigkeit des Films abgestimmte Breite des feststehenden Belichtungsschlitzes und dessen Abstand von der Filmebene wird dies gewährleistet. Dadurch allerdings, daß der Film während der Aufnahme an dem Belichtungsschlitz vorbeibewegt wird, werden alle statischen Motive wie z.B. der Hintergrund verwischt wiedergegeben. Da nur diejenigen Objekte realistisch abgebildet werden, die sich mit gleicher Geschwindigkeit wie der Filmtransport und dabei genau entgegen der Filmtransportrichtung fortbewegen, ist die relative Bewegung der Objekte im Raum nur begrenzt analysierbar. Ein weiterer Nachteil ist, daß sich bei diesen Verfahren keine digitalen oder andere Bildträger einsetzen lassen.

Eine weitere Weitwinkel- und Panorama-Kamera ist aus der DE 34 44 697 A1 bekannt. Um Bildwinkel zu erzielen, die mit herkömmlichen Objektiven nicht oder nicht in der gewünschten Qualität abgebildet werden können, wird während der Aufnahme das Objektiv relativ zu einem Bildspeicher bewegt. Dabei ist das Bildfenster des Objektives kleiner als die zu belichtende Bildfläche. Weiterhin wird vorgeschlagen, das Objektiv durch eine Schlitzblende zu ersetzen, die dann allerdings weit vor der Bildfläche geführt werden muß, oder aber eine Schlitzblende vor dem Objektiv anzuordnen.

Eine weitere, für Aufnahmen gegen stark strahlende Lichtquellen geeignete Fotokamera ist in der DT 24 03 614 A1 offenbart. Um Überstrahlungen zu vermeiden, die entstehen, wenn ein Foto gegen eine stark strahlende Lichtquelle aufgenommen wird, wird bei dieser Kamera jeweils nur ein Teil des Bildes belichtet. Zur Abdeckung der stark strahlenden Lichtquelle ist vor dem Objektiv ein Belichtungsschlitz in Form einer Lamellenkonstruktion angeordnet. Das durch die Lamellenkonstruktion hindurchdringende Licht durchläuft eine weitere Blende als zusätzlichen Überblendschutz, deren Öffnung jedoch etwas breiter gewählt ist, als der von der Lamellenkonstruktion kommende Lichtkegel. Dies ist erforderlich, um eine Beeinflussung des Lichtkegels durch Kanten der weiteren Blende zu verhindern. Die Öffnung der weiteren Blende ist daher im eigentlichen Sinn kein Belichtungsschlitz. Zur Belichtung werden die Lamellenkonstruktion und die weitere Blende synchron über eine Bildfläche bewegt. Es wird so nur der Teil des Bildes überstrahlt, bei dem der Aufnahmebereich in direkter Linie zur Lichtquelle liegt.

Die in DE 34 44 697 A1 und DT 24 03 614 A1 beschriebenen Kameras und Verfahren sind vorwiegend für Aufnahmen statischer Objekte konzipiert. Prinzipiell können mit diesen Verfahren auch Aufnahmen von sich bewegenden Objekten gemacht werden. Bei diesen Systemen ist jedoch der Belichtungsschlitz im Verhältnis zur Breite der Bildfläche relativ groß, so daß sich dies kaum durch Größenveränderungen des bewegten Objektes auf das Bildergebnis auswirkt. Zudem führt bei diesen Systemen die Größe des Belichtungsschlitzes und dessen Abstand von der Filmebene zu Überstrahlungen auf benachbarte, durch den Belichtungsschlitz bereits wieder oder noch abgedeckte Bildbereiche. Diese Überstrahlungen kompensieren mögliche Gleichlaufschwankungen bei der Bewegung des Belichtungsschlitzes und sind somit bei den vorgesehenen Einsatzbereichen der Kamera für eine homogenere Abbildungsqualität durchaus gewünscht. Sie führen aber andererseits bei einem langsamen Vorschub des Belichtungsschlitzes zu unscharfen Abbildungen von sich bewegenden Objekten und sind somit zur konturenscharfen Abbildung von sich langsam bewegenden Objekten, wie beispielsweise einem Fußgänger vor einem unverzerrten Hintergrund nicht geeignet.

Aufgrund des sich mitdrehenden Objektives der in DE 34 44 697 A1 beschriebenen Weitwinkel- und Panoramakamera wird zudem ein deutlich größerer Bildwinkel als mit herkömmlichen Objektiven erreicht. Für formatfüllende Abbildungen ist folglich ein geringer Aufnahmeabstand notwendig. Hierdurch entstehen bei geradlinigen Bewegungen des Objektives zusätzliche perspektivische Verzerrungen, die eine exakte, quantitative Analyse eines Bewegungsvorganges erheblich erschweren.

In diesem Zusammenhang wurde in der deutschen Patentanmeldung 100 07 786 eine Fotokamera sowie ein fotografisches Verfahren vorgeschlagen, mit der bzw. dem sich u.a. konturenscharfe Abbildungen von sich bewegenden Objekten herstellen lassen, aus denen genaue Informationen zur Bewegungsgeschwindigkeit und -richtung des Objekts relativ zu anderen statischen oder dynamischen Bildteilen ableitbar sind.

Während der verhältnismäßig langsam ablaufenden Aufnahme eines Gegenstandes, einer Szene oder eines dynamischen Vorganges können sich die Aufnahmebedingungen verändern. Zudem besteht bisweilen ein Interesse daran, den Ablauf der Aufnahme an den Gegenstand, die Szene oder insbesondere auch an einen dynamischen Vorgang anzupassen.

Hierzu wird eine Fotokamera der eingangs genannten Art vorgeschlagen, die weiterhin umfaßt: eine Antriebseinrichtung, die mit der Blendeneinrichtung derart gekoppelt ist, um den spaltförmigen Belichtungsschlitz über die Bildfläche zu bewegen, eine Steuereinrichtung zur Vorgabe von Kameraparametern, welche ein aufgenommenes Bild beeinflussen, und zur automatischen Veränderung der Kameraparameter während der Bewegung des spaltförmigen Belichtungsschlitzes über die Bildfläche, sowie Einrichtungen zur automatischen Einstellung dieser Parameter an der Kamera.

Hierdurch wird eine kontinuierliche partielle Belichtung der Bildfläche ermöglicht, wobei der freigegebene, spaltförmige und damit sehr schmale Belichtungsschlitz ähnlich der Wirkungsweise eines Flachbettscanners mit relativ langsamer Geschwindigkeit über die gesamte Bildfläche bewegt wird. Die Blendeneinrichtung stellt sicher, daß kein Licht auf die jeweils nicht vom Belichtungsschlitz freigegebenen Anteile der Bildfläche fällt. Die Bewegungsgeschwindigkeit des Belichtungsschlitzes und dessen Spaltbreite können dabei so aufeinander abgestimmt werden, daß einerseits jeder Teil der Bildfläche mit einer für eine konturenscharfe Abbildung ausreichend kurzen Belichtungszeit belichtet wird und andererseits der gesamte Belichtungsvorgang lange genug ist, so daß das fotografierte Motiv auf der Bildfläche in Bewegungsrichtung genügend verzerrt wiedergegeben wird. Dieser Verzerrungseffekt wird gezielt zur Bewegungsanalyse ausgenutzt. Über die Steuereinrichtung und die Einstelleinrichtungen lassen sich die Bildwirkung beeinflussende Kameraparameter während der Aufnahme verändern. Die Veränderung kann in Abhängigkeit der aufzunehmenden Bildinhalte erfolgen. So ist es möglich die Kameraparameter an den Gegenstand, die Szene oder an einen dynamischen Vorgang anzupassen, d.h. zu verändern, wodurch eine hohe Bildqualität mit hohem Informationsinhalt erhalten wird.

Insbesondere können beispielsweise sehr konturenscharfe Abbildungen von sich bewegenden Objekten hergestellt werden, die exakte Informationen zur Bewegungsgeschwindigkeit und-richtung des Objekts relativ zu allen anderen statischen oder dynamischen Bildteilen enthalten. Der Einsatz dieser Kamera bietet sich überall dort an, wo Geschwindigkeiten oder Beschleunigungen von sich bewegenden Objekten auf einfache Weise gemessen oder Bewegungsabläufe analysiert werden sollen. Insbesondere können auch mehrere, sich unterschiedlich bewegende Objekte gleichzeitig analysiert werden. Beispiele hierfür sind unter anderem die Messung der Geschwindigkeit und des Beschleunigungsverhaltens von Fahrzeugen, die Analyse von Bewegungsabläufen in der Leichtathletik, die Beobachtung des Konsumentenverhaltens bei Marketingmaßnahmen, etc.

Die erfindungsgemäße Lösung zeichnet sich überdies durch ihre bauliche Kompaktheit aus. Da der Belichtungsschlitz gleichzeitig als Verschluß funktioniert, ergibt sich zudem ein einfacher Aufbau. Synchronisationsprobleme, die beispielsweise bei einem zu transportierenden Film bei langen Belichtungsvorgängen auftreten würden, sind vollständig ausgeschaltet.

Die oben genannte Aufgabe wird weiterhin gelöst durch ein fotografisches Verfahren zur Aufnahme einer Szene, eines Gegenstandes oder eines dynamischen Vorgangs in Form eines Bildes, bei dem ein spaltförmiger Belichtungsschlitz unmittelbar über eine Bildfläche an einem lichtempfindlichen Medium geführt wird, wobei die Dauer des gesamten Belichtungsvorganges ein Vielfaches der Gesamtbelichtungszeit beträgt, welche sich aus den Abmessungen der Bildfläche, der Spaltbreite und der Bewegungsgeschwindigkeit des Belichtungsschlitzes ergibt, und bei dem Parameter, welche das aufgenommene Bild beeinflussen, während der Bewegung des spaltförmigen Belichtungsschlitzes über die Bildfläche verändert werden. Dieses Verfahren kann manuell durchgeführt werden. Im Hinblick auf eine hohe Aussagekraft der erhaltenen Bilder empfiehlt sich jedoch ein automatisierter Ablauf. Zur Einstellung der Kameraparameter können beispielsweise Elektromotoren eingesetzt werden. Bevorzugt liegt die Gesamtbelichtungszeit in einem Bereich von 0,25 bis 60 s.

Die an einer Kamera gewählte Entfernungseinstellung führt dazu, daß stets nur für eine bestimmte Entfernung ein exakt fokussiertes Bild erzeugt wird. Je nach Blendeneinstellung wird ein Bereich um den eingestellten Entfernungswert noch ausreichend scharf abgebildet (Schärfentiefenbereich). Bei machen Motiven ist es jedoch wünschenswert, Bildinhalte außerhalb dieses Bereiches auch noch ausreichend scharf anzubilden. Hierzu wird vorgeschlagen, die Entfernungseinstellung eines bei der Aufnahme verwendeten Objektives während der Bewegung des spaltförmigen Belichtungsschlitzes über die Bildfläche zu verändern. Alternativ oder in Ergänzung hierzu kann der Abstand zwischen der Bildfläche und einem bei der Aufnahme verwendeten Objektiv während der Bewegung des spaltförmigen Belichtungsschlitzes über die Bildfläche verändert werden. Damit wird ermöglicht, bei entsprechender Vorgabe der einzustellenden Parameter, den Schärfenbereich während der Aufnahme zu verschieben. Beispielsweise kann die Einstellung einer vermuteten Objektbewegung folgen. Auch ist es möglich, Gegenstände mit gekrümmten Oberflächen wie beispielsweise einen Zylinder in einer Ebene scharf abzubilden.

In einer vorteilhaften Ausgestaltung sind dazu an der Fotokamera als Kameraparameter die Entfernungseinstellung des Objektives und/oder der Abstand der Bildfläche von dem Objektiv während der Bewegung des spaltförmigen Belichtungsschlitzes veränderbar und manuell und/oder automatisch einstellbar.

Bevorzugt wird bei dem fotografischen Verfahren während der Bewegung des Belichtungsschlitzes über die Bildfläche die Entfernung zu einem Objekt bzw. zum momentan belichteten Bildteil automatisch gemessen und die Veränderung in Abhängigkeit der gemessenen Entfernung vorgenommen. Damit ist es beispielsweise möglich, ein sich bewegendes Objekt genauer zu verfolgen und mit ausreichender Schärfe abzubilden, selbst wenn dieses den ursprünglich eingestellten Entfernungsbereich verlassen sollte. Vorzugsweise ist dementsprechend an der Fotokamera eine Einrichtung zur automatischen Entfernungsmessung vorgesehen, zur Erfassung des Abstandes eines aufzunehmenden Objektes während der Bewegung des spaltförmigen Belichtungsschlitzes, und zur Übermittlung der erfaßten Information an die Steuereinrichtung.

Ein hoher Kontrastumfang eines Motivs, wie er beispielsweise bei einer Gegenlichtaufnahme auftritt, läßt sich oftmals nicht auf einem fotographischen Film oder einem Display darstellen. Zur Minderung können Filter eingesetzt werden, die abschnittsweise lichtreduzierend wirken. In einer weiteren vorteilhaften Ausgestaltung der Erfindung wird die Blendeneinstellung und somit die auf die Bildfläche einfallende Lichtmenge beispielsweise über eine einstellbare Blende während der Bewegung des spaltförmigen Belichtungsschlitzes über die Bildfläche verändert. Alternativ oder ergänzend hierzu kann die Bewegungsgeschwindigkeit des spaltförmigen Belichtungsschlitzes während der Bewegung des Belichtungsschlitzes über die Bildfläche gezielt verändert werden. Damit kann durch eine Steuerung der auf die Bildfläche einfallenden Lichtmenge ein über das Motiv variierender Kontrastumfang flexibler als mit einem statischen Filter kompensiert werden. Auch ist es möglich, über die Blendenvariation bei einer gleichzeitigen Veränderung der Geschwindigkeit des Belichtungsschlitzes eine gleichmäßige Bildhelligkeit zu gewährleisten und die Schärfentiefe innerhalb eines Bildes zu verändern. Entsprechend sind in einer vorteilhaften Ausgestaltung der Kamera als Parameter vorzugsweise die Blendeneinstellung des Objektives und/oder die Bewegungsgeschwindigkeit des Belichtungsschlitzes während der Bewegung des spaltförmigen Belichtungsschlitzes manuell oder automatisch veränderbar.

Weiterhin kann während der Bewegung des Belichtungsschlitzes über die Bildfläche die Helligkeit des jeweils aufzunehmenden Bildteils gemessen und die Veränderung in Abhängigkeit der gemessenen Helligkeit vorgenommen werden. Bevorzugt ist hierzu an der Kamera eine Einrichtung zur automatischen Belichtungsmessung vorgesehen, zur Erfassung der Helligkeit während der Bewegung des spaltförmigen Belichtungsschlitzes, und zur Übermittlung der erfaßten Information an die Steuereinrichtung. Damit können beispielsweise Veränderungen der Kontrastverhältnisse, die während der Aufnahme auftreten, gut dynamisch ausgeglichen werden.

In einer weiteren vorteilhaften Ausgestaltung der Erfindung wird die Aufnahmebrennweite während der Bewegung des Belichtungsschlitzes über die Bildfläche verändert. Bevorzugt ist dazu an der Kamera als Kameraparameter die Brennweiteneinstellung des Objektives während der Bewegung des spaltförmigen Belichtungsschlitzes veränderbar und automatisch einstellbar. Die Brennweiteneinstellung erfolgt bevorzugt über einen Motor. Damit kann während einer Aufnahme der Abbildungsmaßstab eines Motivs variiert werden, wodurch einzelne Bildteile in ihrer Größe zueinander verändert werden. Eine Einsatzmöglichkeit hierfür ist beispielsweise die Korrektur von stürzenden Linien in der Architekturfotographie.

Vorzugsweise sind an der Fotokamera mit der Steuereinrichtung zusammenwirkende Einrichtungen zur Eingabe und Veränderung der Kameraparameter während der Bewegung des spaltförmigen Belichtungsschlitzes vorgesehen.

Die Bewegung des Belichtungsschlitzes erfolgt bevorzugt mit konstanter Geschwindigkeit über die Bildfläche, um eine hohe Abbildungsgüte zu ermöglichen. Die Geschwindigkeit wird dabei entsprechend der Bewegungsgeschwindigkeit des zu untersuchenden Objekts eingestellt.

Vorzugsweise ist bei einer Größe der Bildfläche von 6x6 cm bis 6x9 cm der Belichtungsschlitz innerhalb eines Zeitraumes von 0,25 bis 60 s über die Breite der Bildfläche führbar, um Objekte wie sich bewegende Personen oder fahrende Kraftfahrzeuge gut zu erfassen.

Weiterhin ist es vorteilhaft, den Belichtungsschlitz unmittelbar vor der Bildfläche anzuordnen. Hierdurch lassen sich auch bei sehr langsamen Bewegungsgeschwindigkeiten des Belichtungsschlitzes Überstrahleffekte weitestgehend ausschalten, so daß auch dann eine hohe Abbildungsschärfe erreicht wird.

Neben der Bewegungsgeschwindigkeit des Belichtungsschlitzes wirkt sich vor allem die Breite des lichtdurchlässigen Spalts und dessen Abstand von der Bildfläche auf die Abbildungsqualität und -schärfe der sich bewegenden Objekte aus. Bevorzugt ist der Belichtungsschlitz in einem Abstand von 0,05 mm bis 1 mm vor der Bildfläche angeordnet. Bei einer Bildflächengröße von 6x6 cm bis 6x9 cm bei Mittelformatkameras weist der Belichtungsschlitz vorzugsweise eine Spaltbreite von 0,02 mm bis 0,2 mm auf. Für kleinere Filmformate, insbesondere Kleinbildformat, müssen die Maße entsprechend verringert, für größere Formate, insbesondere Großbildformat, können sie entsprechend vergrößert werden.

Die Dauer des gesamten Belichtungsvorgangs muß, um die gewünschten Effekte zu erzielen, deutlich länger sein als die sich aus der Bewegungsgeschwindigkeit und der Schlitzbreite ergebende Belichtungszeit jedes einzelnen Bildteils. Je größer das Verhältnis der Spaltbreite des Belichtungsschlitzes zu der effektiv genutzten Breite des Bildträgers ist, um so stärker wird der Bewegungseffekt auf dem Foto wiedergegeben. Für genaue Bewegungsstudien liegt das Verhältnis der Breite des Belichtungsschlitzes zu der Breite der Bildfläche bevorzugt in einem Bereich von 1:40 bis 1:2000. Bei einfachen Geschwindigkeitsmessungen an sich relativ schnell bewegenden Objekten, beispielsweise bei Geschwindigkeitsmessungen an Kraftfahrzeugen, kann bei formatfüllender Abbildung des Motivs ein Verhältnis von ca. 1:40 ausreichend sein. Für die übrigen Anwendungsgebiete empfiehlt sich ein Verhältnis von mindestens 1:200.

Ein besonders einfacher konstruktiver Aufbau ergibt sich dann, wenn die Blendeneinrichtung zwischen zwei Kontaktschaltern hin- und herbewegbar ist. Die Kontaktschalter dienen dabei jeweils zur Abschaltung der Antriebseinrichtung nach einer Bewegung des Belichtungsschlitzes über die gesamte Breite der Bildfläche. Damit steht nach jedem Belichtungsvorgang, bei dem der Belichtungsschlitz über die gesamte Breite der Bildfläche bewegt wird, die Fotokamera unmittelbar für die nächste Aufnahme zur Verfügung, ohne daß hierzu der Belichtungsschlitz zurückgefahren werden müßte. In diesem Zusammenhang ist es weiterhin vorteilhaft, wenn die Antriebseinrichtung einen manuell oder automatisch aktivierbaren Motor umfaßt, dessen Drehrichtung umkehrbar ist. Ein aufwendiges Umkehrgetriebe kann dann entfallen.

Zur Erweiterung der Einsatzmöglichkeiten im Hinblick auf die Bewegungsgeschwindigkeiten der zu untersuchenden Objekte kann die Antriebseinrichtung mit einem schaltbaren Getriebe zur Drehzahleinstellung ausgebildet werden, das dann zwischen dem Motor und der Blendeneinrichtung eingekoppelt wird.

Für eine besonders genaue Bewegung des Belichtungsschlitzes umfaßt die Blendeneinrichtung in einer vorteilhaften Ausgestaltung der Erfindung einen in einer Breitenrichtung der Bildfläche geführten Schlitten, an welchem der Belichtungsschlitz vorgesehen ist. Vorzugsweise umfaßt die Blendeneinrichtung weiterhin Führungsstangen zur Halterung des Schlittens, die sich beiderseits der Enden des Belichtungsschlitzes in Breitenrichtung der Bildfläche erstrecken, wobei mindestens eine der Führungsstangen als Drehspindel ausgebildet ist und mit der Antriebseinrichtung gekoppelt ist. Durch die doppelseitige Halterung des Schlittens wird eine besonders ruhige, schwingungsfreie Führung des Belichtungsschlitzes ermöglicht.

In einer weiteren, vorteilhaften Ausgestaltung ist die Breite des Belichtungsschlitzes veränderbar. Hierdurch läßt sich eine genauere Abstimmung der Fotokamera auf die Geschwindigkeit der zu untersuchenden Objekte erzielen. Beispielsweise kann hierzu der Belichtungsschlitz an einer austauschbaren Blendenplatte der Blendeneinrichtung ausgebildet werden, wobei dann mehrere Blendenplatten mit unterschiedlicher Spaltbreite eingesetzt werden können.

In einer alternativen Ausgestaltung wird der Belichtungsschlitz durch eine Aneinanderreihung einer Vielzahl von elektronisch steuerbaren Filtern gebildet, die mittels elektrischer Impulse einzeln von lichtundurchlässig auf lichtdurchlässig umschaltbar sind. Damit ist es im Prinzip möglich, die Spaltbreite während eines Belichtungsvorganges zu verändern, gegebenenfalls auch in Abstimmung mit der Veränderung der Bewegungsgeschwindigkeit der Blendeneinrichtung.

Vorzugsweise wird die Blendeneinrichtung in einem Hohlraum eines Kameragehäuses zwischen dem Objektiv und der Bildfläche angeordnet, so daß sich eine besonders kompakte Bauweise ergibt. So kann beispielsweise die Blendeneinrichtung in eine herkömmliche Mittelformatkamera eingebaut werden, ohne daß dies mit einer deutlichen Vergrößerung der Außenabmessungen verbunden wäre. Vorzugsweise wird zwischen dem Schlitten und dem Kameragehäuse eine lichtdichte Abdeckung angeordnet, die einen Lichteinfall auf die Bildfläche mit Ausnahme durch den Belichtungsschlitz abschirmt

Die Antriebseinrichtung wird jedoch bevorzugt an der Kameraaußenseite angebracht. Die Abmessungen hierfür bewegen sich im Bereich herkömmlicher Motorantriebe für einen automatischen Filmtransport.

An dem Kameragehäuse können weiterhin Anschlußeinrichtungen für ein Stativ vorgesehen werden. Durch die Verwendung eines Statives lassen sich während des gesamten Aufnahmevorgangs unerwünschte Bewegungen und Erschütterungen von der Kamera fernhalten, welche das Bildergebnis ungünstig beeinflussen würden.

Die beschriebene Kamera ist unabhängig vom verwendeten Objektivtyp oder der Objektivbrennweite. Für eine möglichst formatfüllende Abbildung ist es vorteilhaft, wenn das Objektiv auswechselbar oder zumindest mit variabler Brennweite ausgebildet ist. Für meßtechnische Aufnahmen sind, um perspektivische Verzerrungen auszuschalten, Normal- und Telebrennweiten vorzuziehen.

Bevorzugt ist die Bildfläche eben ausgebildet, wobei an dieser ein empfindliches Medium anordenbar ist. Dieses ist beispielsweise ein lichtempfindlicher Film. Allerdings ist es auch möglich, an der Bildfläche andere fotorezeptive Elemente vorzusehen, beispielsweise dort einen CCD-Empfänger anzuordnen.

In einer alternativen Ausgestaltung kann die Blendeneinrichtung anstatt zwischen dem Objektiv und der Bildfläche auch vor dem Objektiv angeordnet werden. Zur Ausschaltung von Streulicht wird eine lichtdichte Abdeckung zwischen dem Belichtungsschlitz und der Öffnung des Objektives angebracht, so daß lediglich das durch den spaltförmigen Belichtungsschlitz einfallende Licht die Bildfläche erreicht.

In einer weiteren Ausgestaltung der Erfindung ist die Bildfläche zylinderförmig gekrümmt ausgebildet, wobei dann der Belichtungsschlitz und das Objektiv jeweils auf einer Bahn um den Krümmungsmittelpunkt der Bildfläche geführt sind. Insbesondere bogenförmige Bewegungen lassen sich hierdurch besonders verzerrungsfrei abbilden. In diesem Fall muß die Drehrichtung der Antriebseinrichtung nicht umkehrbar sein.

Weiterhin ist es möglich, zwei parallele Belichtungsschlitze vorzusehen, die im Augenabstand synchron über jeweils eine Bildfläche bewegbar sind. Hierdurch lassen sich dynamische Vorgänge auch mit den Methoden der Stereofotografie erfassen. Alternativ können auch zwei Fotokameras der vorstehend erläuterten Art verwendet werden, die im Augenabstand parallel zueinander angeordnet und synchron auslösbar sind. Diese zweite Lösung besitzt den Vorteil, daß das Kameragehäuse insgesamt kleiner bleibt und in Fällen, in denen lediglich einzelne Aufnahmen benötigt werden, eine einfachere Handhabung erlaubt.

Die Erfindung wird nachfolgend anhand eines in der Zeichnung dargestellten Ausführungsbeispiels näher erläutert. Die Zeichnung zeigt in
- Figur 1: eine räumliche Darstellung eines Ausführungsbeispiels einer Fotokamera,
- Figur 2: eine Schnittdarstellung durch die Fotokamera nach Figur 1,
- Figur 3: eine Ansicht von hinten durch eine Bildfläche in Richtung eines Objektives der Fotokamera nach Figur 1,
- Figur 4: ein mit der Fotokamera nach Figur 1 aufgenommenes Bild,
- Figur 5: einen Horizontalschnitt durch zweites Ausführungsbeispiel einer Fotokamera, und in
- Figur 6: eine schematische Darstellung einer Steuereinheit einer Fotokamera.

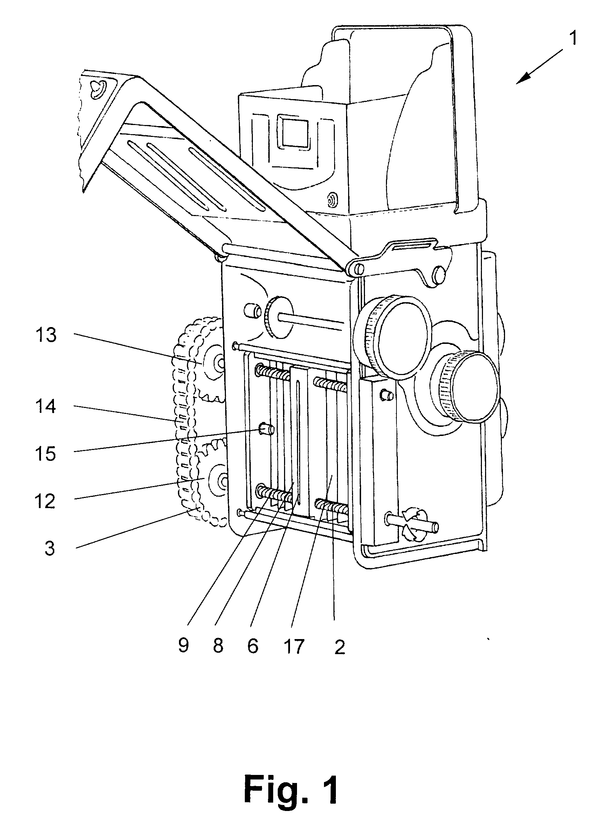

Das Ausführungsbeispiel in den Figuren 1 bis 3 zeigt eine Fotokamera 1 auf der Basis einer herkömmlichen, zweiäugigen Spiegelreflexkamera, die zusätzlich mit einer Blendeneinrichtung 2 und einer Antriebseinrichtung 3 ausgestattet ist, um konturenscharfe Abbildungen von sich bewegenden Objekten vor einem verzerrungsfreien Umfeld herzustellen. Ein an der Spiegelreflexkamera ohnehin vorhandener Verschluß bleibt hier vorhanden. Er wird fortan jedoch in seiner Daueroffenstellung, d.h. in der Betriebsart "B" genutzt. In einer einfacheren Ausführungsvariante kann die Fotokamera als Spezialkamera für den vorgenannten Zweck auch ohne einen separaten Verschluß ausgebildet werden. Die Verschlußfunktion wird dann von der Blendeneinrichtung 2 übernommen.

Sofern ein separater Verschluß vorhanden ist, wird dieser jedoch vorzugsweise erst kurz vor der Aufnahme geöffnet und direkt nach dem Belichtungsvorgang geschlossen, so daß ein unerwünschter zusätzlicher Lichteinfall vermieden wird. Allerdings ist eine Kopplung des Verschlusses mit der Blendeneinrichtung 2 hierbei nicht unbedingt nötig. Alle weiteren Funktionen der Spiegelreflexkamera werden beibehalten. Die Verwendung eines zweiten Objektives für das Sucherbild, wie es bei zweiäugigen Spiegelreflexkameras der Fall ist, hat den Vorteil, daß der Sucherdurchblick über die Mattscheibe auch nach einem Umbau der Kamera ohne Einschränkungen möglich ist.

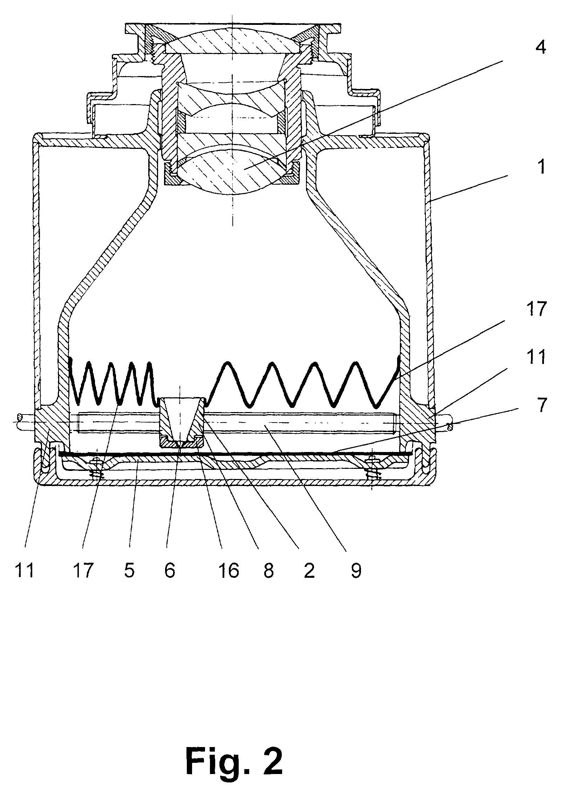

Wie insbesondere Figur 2 entnommen werden kann, ist die Blendeneinrichtung 2 innerhalb eines Kameragehäuses zwischen einem Aufnahmeobjektiv 4 und einer Rückwand 5 angeordnet, auf welche das durch das Objektiv 4 einfallende Licht projiziert wird. Die Blendeneinrichtung 2 ist mit einem spaltförmigen Belichtungsschlitz 6 versehen, so daß lediglich durch diesen hindurchdringendes Licht bis an eine Bildfläche 7 an der Rückwand 5 gelangen kann. Das Objektiv 4 ist lösbar mit dem Kameragehäuse gekoppelt. Dieses kann zur Änderung des Brennweitenbereiches ausgewechselt werden. Bevorzugt werden hier Objektive herkömmlicher Bauart eingesetzt, die dem Fachmann in ihrem Aufbau bekannt sind und daher nicht näher erläutert werden müssen. Für eine möglichst volle Formatausnutzung werden Objektive mit Brennweiten im Normal- oder Telebereich verwendet.

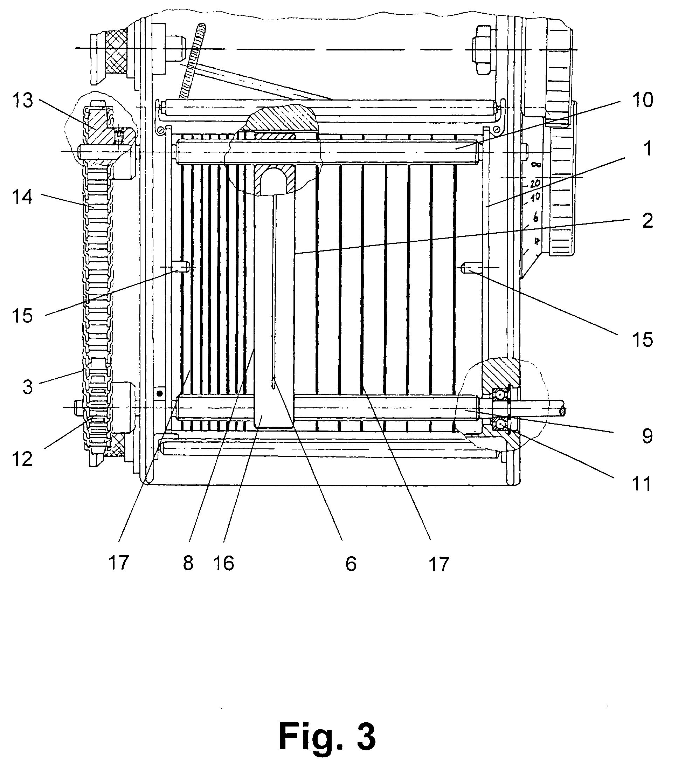

Die Blendeneinrichtung 2 umfaßt einen Schlitten 8 sowie zwei Führungsstangen 9 und 10, über die der Schlitten 8 parallel zu der hier ebenen Bildfläche 7 geführt ist. Wie insbesondere Figur 3 zu entnehmen ist, verlaufen die Führungsstangen 9 und 10 oberhalb und unterhalb des Belichtungsschlitzes 6 an dem Schlitten 8. Mindestens eine, hier jedoch beide Führungsstangen 9 und 10 sind als Drehspindeln mit einem Außengewinde ausgebildet und im Kameragehäuse drehbar abgestützt. Hier sind die Führungsstangen 9 und 10 jeweils über Kugellager 11 gehalten.

Durch Drehen der Führungsstangen 9 und 10 wird der Schlitten 8 und damit der Belichtungsschlitz 6 über die Bildfläche 7 bewegt. Die Führungsstangen 9 und 10 übernehmen folglich die kontinuierliche Fortbewegung des Belichtungsschlitzes 6 wie auch dessen exakte Führung.

Es ist auch möglich, lediglich eine der Führungsstangen 9 und 10 als Drehspindel zu Antriebszwecken auszubilden, wohingegen die andere der Führungsstangen nur eine Führungsfunktion übernimmt und dazu glattflächig ausgebildet ist.

Der Antrieb der Führungsstangen 9 und 10 erfolgt über die an der Kameraaußenseite angeordnete Antriebseinrichtung 3, die in den Figuren jedoch lediglich teilweise abgebildet ist. Diese umfaßt zunächst einen hier nicht näher dargestellten elektrischen Motor, dessen Drehrichtung umkehrbar ist. Weiterhin umfaßt die Antriebseinrichtung 3 ein ebenfalls nicht näher dargestelltes Getriebe zur Drehzahlregulierung, über das der Motor mit den Führungsstangen 9 und 10 gekoppelt ist.

Ein gleichförmiger Antrieb beider Führungsstangen 9 und 10 wird durch ein Synchrongetriebe der Antriebseinrichtung 3 sichergestellt. Das Synchrongetriebe weist hier zwei Zahnräder 12 und 13 oder auch zwei Zahnriemenscheiben auf, die an den Führungsstangen 9 und 10 befestigt sind. Weiterhin umfaßt das Synchrongetriebe der Antriebseinrichtung 3 eine Gliederkette 14 oder auch einen Zahnriemen, über welche die Zahnräder 12 und 13 bzw. die Zahnriemenscheiben synchronisiert werden.

Es ist auch möglich, die gesamte Antriebseinrichtung 3 in das Gehäuse der Kamera 1 zu integrieren. Dabei kann anstelle eines Spindelantriebes auch ein Linearmotor verwendet werden. Vorzugsweise wird die Antriebseinrichtung 3 in die Rückwand des Kameragehäuses eingebaut, so daß diese als eigenständiges Modul eine Rückwand einer herkömmlichen Kamera ersetzen kann. Die Belichtungseinrichtung 2 kann ebenfalls in dieses Modul integriert werden.

Das Synchrongetriebe, der Motor und das Drehzahlgetriebe können an der gleichen Seite des Kameragehäuses angeordnet werden und zusammen eine Baueinheit ausbilden. In dem dargestellten Ausführungsbeispiel ist jedoch das Synchrongetriebe an der dem Motor und dem Drehzahlgetriebe gegenüberliegenden Seite der Führungsstange 9 angeordnet, d.h. in Figur 3 befindet sich das Synchrongetriebe auf der linken Seite des Kameragehäuses, wohingegen der Motor und das Drehzahlgetriebe auf der rechten Seite liegen. Hierdurch kann eine versehentliche Verspannung des Schlittens 8 beim Anschluß des Motors bzw. des Drehzahlgetriebes ausgeschlossen werden.

Der Antrieb der unteren Führungsstange 9 kann direkt mit dem Elektromotor oder auch indirekt über eine Zahnriemenübersetzung erfolgen. Im letzteren Fall kann durch die Veränderung der Übersetzung die Bewegungsgeschwindigkeit des Belichtungsschlitzes 6 verändert werden. Die Umlaufrichtung des Motors ist über einen Wechselschalter umkehrbar. Nach einem Öffnen des Kameraverschlusses kann der Motor durch einen Tastschalter eingeschaltet werden, woraufhin der Belichtungsschlitz 6 über die Bildfläche bewegt wird. Durch zwei an Innenwänden der Fotokamera 1 angebrachte Kontakttastschalter 15 wird der Motor automatisch nach dem Überfahren oder Abtasten der gesamten Breite der Bildfläche 7 ausgeschaltet, indem der Schlitten 8 in Anlage gegen einen der Kontakttastschalter 15 gelangt. Mit dem automatischen Ausschalten des Motors erfolgt gleichzeitig ein Umschalten des Wechselschalters, so daß bei einem erneuten Einschalten des Motors dieser in der entgegengesetzten Richtung läuft. Hierdurch ist sichergestellt, daß bei einer Fehlbedienung eine Verspannung der Blendeneinrichtung 2 mit dem Gehäuse der Kamera 1 nicht auftritt.

Der Schlitten 8 der Blendeneinrichtung 2 besitzt am oberen und am unteren Ende ein Führungsgewinde, so daß ein exakter Vortrieb und eine spannungsfreie Führung gewährleistet ist. An dem rahmenartig ausgebildeten Schlitten 8 ist eine Blendenplatte 16 vorgesehen, welche die Rahmenöffnung des Schlittens 8 bis auf den an der Blendenplatte 16 vorgesehenen Belichtungsschlitz 6 abdeckt. Durch einen Austausch der Blendenplatte 16, die hier über die öffenbare Rückwand 5 der Kamera 1 gut zugänglich ist, kann die Form des Belichtungsschlitzes 6 einfach an unterschiedliche Aufnahmesituationen angepaßt werden. Die Blendenplatte 16 wird über eine paßgenaue Führung an dem Schlitten 8 montiert.

Bei einer Bildflächengröße von 6x6 cm bis 6x9 cm weist der Belichtungsschlitz 6 je nach Einsatzzweck eine lichtdurchlässige Spaltbreite von 0,02 mm bis 0,2 mm auf. Somit kann durch die Verwendung verschiedener Belichtungsschlitzbreiten die Kamera auf die jeweilige Aufnahmesituation eingestellt werden. Der Abstand des Belichtungsschlitzes 6 unmittelbar vor der Bildfläche 7 liegt im Bereich von 0,05 bis 1 mm, vorzugsweise im Bereich von 0,05 bis 0,5 mm.

Um zu erreichen, daß bei einer langsamen Bewegung des Belichtungsschlitzes 6 über die Breite der Bildfläche 7 das Licht lediglich durch den Belichtungsschlitz 6 auf sehr schmale Teilabschnitte der Bildfläche 7 fällt, müssen jeweils nicht von dem Belichtungsschlitz 6 freigegebene Abschnitte der Bildfläche 7 vor Lichteinfall geschützt werden. Die Blendeneinrichtung 2 umfaßt zu diesem Zweck weiterhin eine lichtundurchlässige Abdeckung in Form eines beweglichen Faltbalgs 17, der an den Gehäuseinnenwänden der Kamera 1 und beiderseits an dem Schlitten 8 montiert ist. Der Faltenbalg 17 liegt auf der Objektivseite der Führungsstangen 9 und 10. Anstelle eines Faltenbalges können auch andere Abdeckeinrichtungen, beispielsweise in Form eines aufrollbaren Tuchvorhangs oder eines Lamellenvorhangs verwendet werden, die einen Wegausgleich zu dem Schlitten 8 erlauben.

In vielen Anwendungsfällen ist es wünschenswert, vor (z.B. zur Vorabeinstellung der Kamera) oder während der Aufnahme den Belichtungsvorgang zu verfolgen. Dies ist dadurch möglich, daß zusätzlich unterhalb einer Mattscheibe eine über eine Gewindestange angetriebene Markierung montiert wird. Dadurch, daß diese Gewindestange mit den beiden Führungsstangen 9 und 10 über eine Gliederkette oder auch einen Zahnriemenantrieb verbunden wird, kann die Bewegung des Belichtungsschlitzes 6 relativ zu der Bildfläche 7 auf der Mattscheibe verfolgt werden.

Während die Einstellung der Blende wie bei handelsüblichen Kameras über das Objektiv 4 vorgenommen wird, kann die Belichtungszeit über zwei Faktoren eingestellt werden. Über ein stufig oder stufenlos schaltbares Getriebe wird die Bewegungsgeschwindigkeit des Belichtungsschlitzes 6 verändert. Alternativ kann die Breite des lichtdurchlässigen Belichtungsschlitzes 6 verändert werden, beispielsweise durch einen Austausch der Blendenplatte 16. Welche Verstellmöglichkeit oder Kombination aus beiden Verfahren gewählt wird, hängt von dem abzubildenden Motiv und der beabsichtigten Bildwirkung ab. Einfache Kameras 1 können aus Kostengründen werkseitig mit einer fest vorgegebenen Belichtungszeit versehen werden. Universeller einsetzbare Kameras 1 können mit variabler Bewegungsgeschwindigkeit oder veränderbarer Belichtungsschlitzbreite oder mit beiden Möglichkeiten versehen werden.

Die Kamera 1 besitzt weiterhin eine Vorrichtung, mit der eine stabile Montage der Kamera auf einem Stativ möglich ist. Damit ist gewährleistet, daß während des gesamten Aufnahmevorgangs keine Erschütterungen das Bildergebnis beeinflussen.

Für dreidimensionale Bewegungsstudien werden zwei mit der beschriebenen Technik ausgestattete Fotokameras 1 parallel im Augenabstand montiert und zeitgleich ausgelöst. Die beiden Bilder werden anschließend mit den bekannten Methoden der Stereofotografie betrachtet bzw. projiziert. Alternativ kann die beschriebene Aufnahmeeinrichtung in doppelter Ausführung auch in einem Kameragehäuse, welches parallel mit zwei in entsprechendem Abstand montierten Objektiven ausgestattet ist, untergebracht werden.

Die beschriebene Fotokamera ist unabhängig von dem verwendeten Bildträger. Es können sowohl konventionelle, insbesondere fotochemische Filmmaterialien als auch andere magnetische oder digitale Speichermedien verwendet werden, die jeweils in der Bildfläche 7 zu plazieren sind. Beispielsweise wird die Bildfläche 7 durch eine CCD-Matrix gebildet.

In einer Abwandlung des Ausführungsbeispiels wird der Belichtungsschlitz 6 durch eine Aneinanderreihung einer Vielzahl von elektronisch steuerbaren Filtern gebildet. Diese sind mittels elektrischer Impulse einzeln von lichtundurchlässig auf lichtdurchlässig umschaltbar. Damit kann ohne einen Austausch einer Blendenplatte die Spaltweite über den oben angegebenen Bereich schnell und flexibel eingestellt werden. Über eine Steuereinrichtung kann überdies eine Abstimmung mit der Ansteuerung der Antriebseinrichtung 3 erfolgen, um die Bewegungsgeschwindigkeit des Belichtungsschlitzes 6 und dessen Spaltbreite aufeinander abzustimmen.

In einer weiteren Abwandlung ist die Bildfläche 7 zylinderförmig gekrümmt. Der Belichtungsschlitz 6 und das Objektiv 4 werden dann jeweils auf einer Bahn um den Krümmungsmittelpunkt der Bildfläche 7 geführt.

Weiterhin ist es auch möglich, die vorstehend beschriebene Blendeneinrichtung 2, anstatt zwischen dem Objektiv 4 und der Bildfläche 7 vor dem Objektiv 4 anzuordnen. Zur Ausschaltung von Streulicht wird eine lichtdichte Abdeckung zwischen dem Belichtungsschlitz 6 und der Öffnung des Objektives 4 angebracht, so daß lediglich das durch den spaltförmigen Belichtungsschlitz 6 einfallende Licht die Bildfläche 7 erreicht. Bei dieser Anordnung werden bevorzugt Weitwinkelbrennweiten eingesetzt, wobei der Belichtungsschlitz 6 mittels eines spindelgeführten Schlittens in einem Abstand in der Größenordnung von 20 cm vor dem Objektiv 4 verfahren wird.

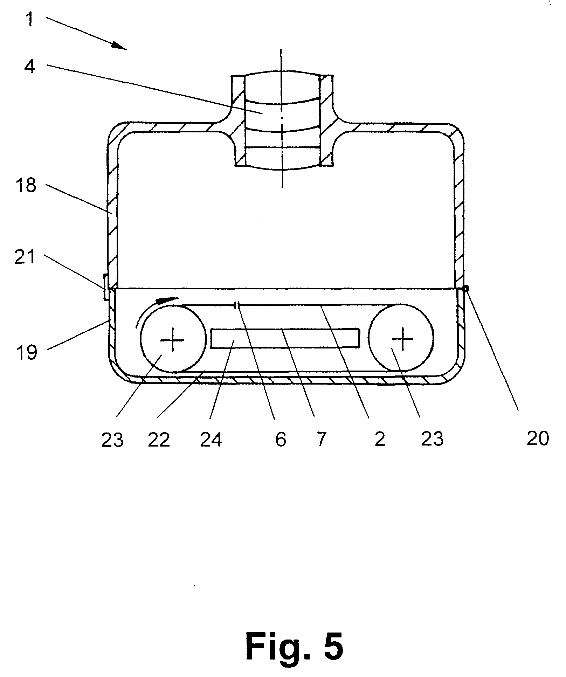

Ein zweites Ausführungsbeispiel einer Fotokamera ist in Figur 5 dargestellt. Bei dieser Fotokamera 1 ist die Antriebseinrichtung sowie die Belichtungseinrichtung 2 in einem Gehäusemodul 19 aufgenommen, das an der Rückwand eines hier nur schematisch dargestellten Kameragehäuses 18 angeordnet ist. Das Gehäusemodul 19 ersetzt die Rückwand einer herkömmlichen Kamera. Diese muß hierzu selbst nicht verändert werden. Das Gehäusemodul 19 kann so als Zusatzteil entsprechend einer Datenrückwand oder eines wechselbaren Filmmagazins in ein bereits bestehendes Kamerasystem integriert werden.

Wie Figur 5 entnommen werden kann, ist das Gehäusemodul 19 über ein Scharnier 20 mit dem Kameragehäuse 18 gekoppelt und über einen Verschluß 21 mit diesem verriegelbar. Die Belichtungseinrichtung 2 innerhalb des Gehäusemoduls 19 umfaßt einen umlaufenden, lichtdichten Vorhang 22, der um zwei drehbare Umlenkrollen 23 gelegt ist. Eine oder beide Umlenkrollen 23 sind durch einen Motor, der hier nicht im Detail dargestellt ist, angetrieben. Bei einer Drehung der Umlenkrollen 23 wird der in dem lichtdichten Vorhang 22 ausgebildete Belichtungsschlitz 6 über die Bildfläche 7 bewegt, die hier an einem Bildträger 24 vorgesehen ist. Der Bildträger 24, z.B. ein Filmmagazin, liegt zwischen dem hinlaufenden und dem zurücklaufenden Teil des Vorhangs 22 zwischen den Umlenkrollen 23. Da der Belichtungsschlitz 6 an der Rückseite des Bildträgers 24 vorbeigeführt werden kann, ist hier eine Umsteuerung der Drehrichtung des Motors nicht erforderlich.

Im folgenden soll nun kurz die Vorgehensweise zur konturscharfen Darstellung des Bewegungsablaufes eines langsam bewegten Objektes, wie beispielsweise der Schrittfolge eines Fußgängers erläutert werden. Die Ausführungen gelten entsprechend auch für die Analyse der Beschleunigung eines schneller fahrenden Kraftfahrzeuges.

Hierzu wird zunächst in Abstimmung auf die zu erwartende Geschwindigkeit des Objektes die Spaltbreite des Belichtungsschlitzes 6 vorgewählt. Sofern die Bewegungsgeschwindigkeit des Belichtungsschlitzes 6 einstellbar ist, erfolgt die Auswahl der Spaltweite in Abstimmung mit dieser.

Nach Ausrichtung und stabiler Lagerung der Kamera 1 wird diese bei geöffnetem Objektiv 4 ausgelöst, indem der Antrieb der unteren Führungsstange 9 eingeschaltet wird. Der zunächst in einer Endstellung außerhalb der Bildfläche 7 ruhende Belichtungsschlitz 6 beginnt sich dann langsam ähnlich der Wirkungsweise eines Flachbettscanners über die Bildfläche 7 zu bewegen, wobei die Dauer des gesamten Belichtungsvorganges wesentlich länger ist, als die sich aus der Bewegungsgeschwindigkeit des Belichtungsschlitzes 6 und der Spaltbreite desselben ergebende Belichtungszeit. Die Dauer des Belichtungsvorganges liegt zwischen 0,25 bis 60 s. Mit dem Überstreichen des gegenseitigen Endes der Bildfläche 7 ist die Aufnahme beendet. Durch ein Anlaufen des Schlittens 8 gegen den Kontakttastschalter 15 wird der Motor abgeschaltet und gleichzeitig der Wechselschalter betätigt. Bei einem erneuten Motorstart dreht der Motor dann in Gegenrichtung und der Belichtungsschlitz 6 läuft in seine in bezug auf die Breite der Bildfläche 7 gegenüberliegende Ausgangsstellung zurück.

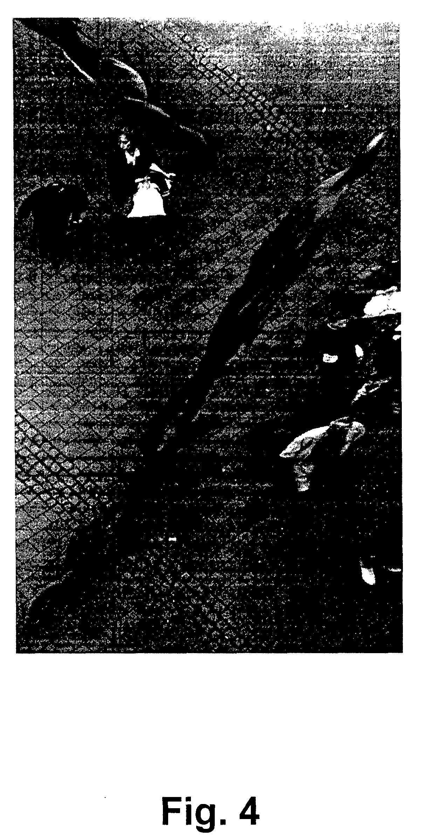

Auf diese Weise wird das bewegte Objekt scharf, jedoch in Bewegungsrichtung verzerrt vor einem unverzerrten Hintergrund abgebildet. Ein Beispiel für eine solche Abbildung ist in Figur 4 dargestellt, welche einen von unten nach oben durch das Bild eilenden Fußgänger zeigt. Bei dieser Aufnahme lief der Schlitten 8 mit dem Belichtungsschlitz in etwa vier Sekunden über eine Bildfläche 7 mit einem Format von ca. 2,5 x 4 cm. Dabei sind die aufsetzenden Füße mehrerer Schritte hintereinander deutlich zu erkennen. Der Hintergrund ist ebenfalls unverzerrt widergegeben. Aus der Beurteilung der erhaltenen Darstellung können Rückschlüsse über den Bewegungsvorgang gezogen werden. Beispielsweise kann die Bewegungsrichtung oder auch die Bewegungsgeschwindigkeit einzelner Partien des bewegten Objektes genau festgestellt werden.

Das Verfahren eignet sich auch gut zur genauen Geschwindigkeitskontrolle von Fahrzeugen. Dabei können selbst mehrere Fahrzeuge mit unterschiedlichen Geschwindigkeiten und Bewegungsrichtungen auf einem Bildträger gleichzeitig erfaßt und insbesondere im Hinblick auf die Fahrgeschwindigkeit analysiert werden.

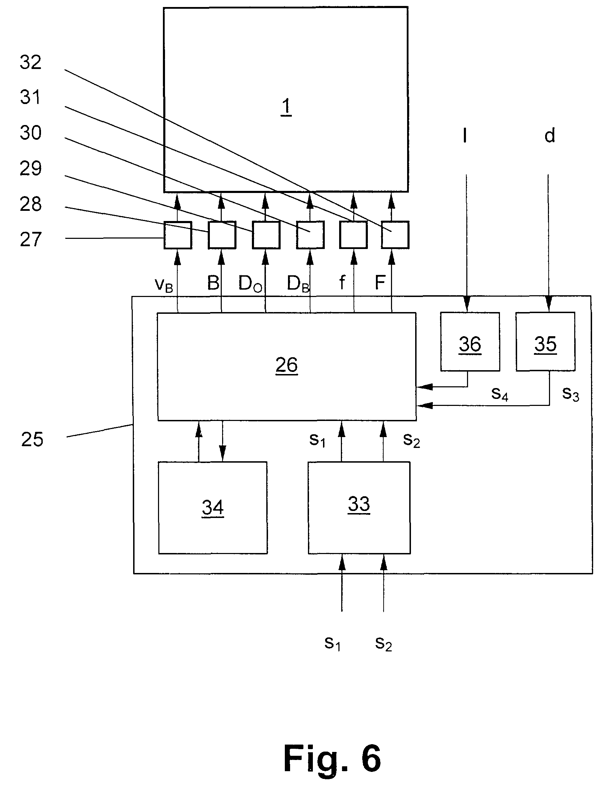

Figur 6 zeigt eine schematische Darstellung der Steuereinheit 25 der Fotokamera 1. Die Steuereinheit 25 umfaßt eine zentrale Steuereinrichtung 26 zur Vorgabe von Kameraparametern, die über automatische, motorangetriebene Einstelleinrichtungen 27 bis 32 an der Kamera 1 eingestellt werden. In dem dargestellten Ausführungsbeispiel sind die Entfernungseinstellung D_{O} des Objektives 4, der Abstand D_{B} der Bildfläche 7 von dem Objektiv 4, die Blendeneinstellung B des Objektives 4, die Bewegungsgeschwindigkeit v_{B} des Belichtungsschlitzes 6 und die Brennweiteneinstellung f des Objektives 4 einstellbar. Zudem wird ein Filter, hier ein Polfilter wahlweise zu- oder ausgeschaltet (F). Die Variation der Parameter kann während der Bewegung des spaltförmigen Belichtungsschlitzes 6 über die Bildfläche 7 vorgenommen werden.

Zur Vorgabe der Kameraparameter ist eine Eingabeeinrichtung 33 vorgesehen, die hier in die Steuereinheit 25 integriert ist. Über die Steuereinrichtung 26 kann durch Eingabe eines Startsignals s₁ ein Aufnahmevorgang ausgelöst werden. Überdies können die Parameter oder diese repräsentierende oder kennzeichnende Informationen s₂ mit ihrem zeitlichen Verlauf über eine Tastatur eingegeben werden. Zur Eingabe sind auch Einstellräder, Schalter und dergleichen möglich. Weiterhin kann die Eingabeeinrichtung 33 eine Datenschnittstelle aufweisen, über die die zeitlichen Verläufe der Kameraparameter bzw. Eingabeinformationen s₂ an die zentrale Steuereinrichtung 26 übermittelt werden. Dies kann online erfolgen. Es ist auch möglich, als Eingabeeinrichtung 33 für die Kameraparameter lediglich eine Datenschnittstelle vorzusehen. In dem dargestellten Beispiel umfaßt die Steuereinheit 25 zusätzlich einen Speicher 34, in dem die zeitlichen Verläufe der Kameraparameter abgelegt werden.

Weiterhin ist an der Kamera 1 eine Einrichtung 35 zur automatischen Entfernungsmessung vorgesehen, mit der der Abstand d eines aufzunehmenden Objektes während der Bewegung des spaltförmigen Belichtungsschlitzes 6 erfaßt werden kann. Die erfaßte Information s₃ wird an die Steuereinrichtung 26 übermittelt und dort bei der Einstellung der Kameraparameter berücksichtigt. Entsprechend ist zusätzlich eine Einrichtung 36 zur automatischen Belichtungsmessung vorgesehen ist, um während der Bewegung des spaltförmigen Belichtungsschlitzes 6 die Helligkeit I des Bildmotives oder von Teilen desselben zu erfassen. Auch die Helligkeitsinformation s4 wird an die Steuereinrichtung 26 übermittelt und dort bei der Einstellung der Kameraparameter berücksichtigt. Die beiden Einrichtungen 35 und 36 sind ebenfalls in die Steuereinheit 25 integriert. Die Informationserfassung und -übertragung an die Steuereinrichtung erfolgt bevorzugt kontinuierlich.

Damit läßt sich die Kamera 1 für eine Vielzahl von nicht nur dynamischen, sondern auch statischen Aufnahmeaufgaben einsetzen. Durch eine gegebenenfalls auch manuelle Veränderung der Entfernungseinstellung kann beispielsweise der Schärfenbereich an einzelne Bildbereiche angepaßt werden. Dabei kann die resultierende Schärfenebene nicht nur gekippt, sondern auch zumindest in einer Richtung beliebig gekrümmt werden. So ist es z.B. möglich, scharfe Abbildungen von zylindrischen Oberflächen zu erhalten.

Durch eine Variation der Belichtungseinstellung sind auch Bildmotive mit einem hohen Bildkontrast gut abzubilden, da der Lichteinfall während der Bewegung des Belichtungsschlitzes 6 an den jeweiligen Bildabschnitt angepaßt werden kann. Durch die Kombination der Bewegungsgeschwindigkeitsänderung des Belichtungsschlitzes 6 mit einer Veränderung einer Blendeneinstellung wird eine gleichmäßige Belichtung erzielt. Über die Blendeneinstellung ist auch der Schäfentiefebereich während einer Aufnahme dynamisch veränderbar.

Weiterhin kann durch eine graduelle Veränderung der Brennweite während der Aufnahme der Abbildungsmaßstab geändert werden. Dies eröffnet eine Korrekturmöglichkeit für das Problem der stürzenden Linien, ohne daß hierzu, wie bei herkömmlichen Shiftobjektiven nötig, eine Lageänderung der Bildfläche 7 zu dem Objektiv 4 vorzunehmen wäre.

## Patentansprüche

1. Fotokamera, umfassend:
ein Objektiv (4) zur Projektion einfallenden Lichtes auf eine Bildfläche (7),
eine Blendeneinrichtung (2), die zwischen dem Objektiv (4) und der Bildfläche (7) angeordnet ist, wobei die Blendeneinrichtung (2) einen spaltförmigen Belichtungsschlitz (6) aufweist,
eine Antriebseinrichtung (3), die mit der Blendeneinrichtung (2) derart gekoppelt ist, um den spaltförmigen Belichtungsschlitz (6) über die Bildfläche (7) zu bewegen,
eine Steuereinrichtung (26) zur Vorgabe von Kameraparametern, welche ein aufgenommenes Bild beeinflussen, und zur automatischen Veränderung der Kameraparameter während der Bewegung des spaltförmigen Belichtungsschlitzes (6) über die Bildfläche (7), und
Einrichtungen (27 bis 32) zur automatischen Einstellung dieser Parameter an der Fotokamera (1).

2. Fotokamera nach Anspruch 1, **dadurch gekennzeichnet, daß** die Steuereinrichtung (26) Mittel aufweist, über welche als Kameraparameter während der Bewegung des spaltförmigen Belichtungsschlitzes (6) manuell und/oder automatisch veränderbar sind:
- die Entfernungseinstellung des Objektives (4) und/oder der Abstand der Bildfläche (7) von dem Objektiv (4), und/oder
- die Blendeneinstellung des Objektives (4), und/oder
- die Bewegungsgeschwindigkeit des Belichtungsschlitzes (6), und/oder
- die Brennweiteneinstellung des Objektives (4), und/oder
- die Schlitzbreite des Belichtungsschlitzes (6).

3. Fotokamera nach einem der Ansprüche 1 oder 2, **dadurch gekennzeichnet, daß** der Belichtungsschlitz (6) mit konstanter Geschwindigkeit über die Bildfläche (7) bewegbar ist, vorzugsweise innerhalb eines Zeitraumes von 0,25 s bis 60 s die Breite einer Bildfläche (7) der Größe von 6x6 cm bis 6x9 cm.

4. Fotokamera nach einem der Ansprüche 1 bis 3, **dadurch gekennzeichnet, daß** der Belichtungsschlitz (6) unmittelbar vor der Bildfläche (7), vorzugsweise in einem Abstand von 0,05 mm bis 1 mm vor der Bildfläche (7), angeordnet ist.

5. Fotokamera nach einem der Ansprüche 1 bis 4, **dadurch gekennzeichnet, daß** die Blendeneinrichtung (2) einen in Breitenrichtung der Bildfläche (7) geführten Schlitten (8) umfaßt, an welchem der Belichtungsschlitz (6) vorgesehen ist.

6. Fotokamera nach einem der Ansprüche 1 bis 5, **dadurch gekennzeichnet, daß** der Belichtungsschlitz (6) durch eine Aneinanderreihung einer Vielzahl von elektronisch steuerbaren Filtern gebildet wird, die mittels elektrischer Impulse einzeln zwischen einem lichtundurchlässigen Zustand auf lichtdurchlässigen Zustand umschaltbar sind.

7. Fotokamera nach einem der Ansprüche 1 bis 6, **dadurch gekennzeichnet, daß** die Blendeneinrichtung (2), die Antriebseinrichtung (3) und die Bildfläche (7) in Gehäusemodul integriert sind, das lösbar an dem Gehäuse der Kamera befestigbar ist.

8. Fotokamera nach einem der Ansprüche 1 bis 7, **dadurch gekennzeichnet, daß** der Belichtungsschlitz (6) bei einer Bildflächengröße von 6x6 cm bis 6x9 cm eine lichtdurchlässige Spaltbreite von 0,02 mm bis 0,2 mm aufweist.

9. Fotografisches Verfahren zur Aufnahme einer Szene, eines Gegenstandes oder eines dynamischen Vorgangs in Form eines Bildes, bei dem ein spaltförmiger Belichtungsschlitz (6) unmittelbar über eine Bildfläche (7) an einem lichtempfindlichen Medium geführt wird, wobei die Dauer des gesamten Belichtungsvorganges ein Vielfaches der Gesamtbelichtungszeit beträgt, welche sich aus den Abmessungen der Bildfläche (7), der Spaltbreite und der Bewegungsgeschwindigkeit des Belichtungsschlitzes (6) ergibt, und bei dem Parameter, welche das aufgenommene Bild beeinflussen, während der Bewegung des spaltförmigen Belichtungsschlitzes (6) über die Bildfläche (7) verändert werden.

10. Fotografisches Verfahren nach Anspruch 10, **dadurch gekennzeichnet, daß** während der Bewegung des spaltformigen Belichtungsschlitzes (6) über die Bildfläche (7) verändert wird:
- die Entfernungseinstellung eines bei der Aufnahme verwendeten Objektives (4), und/oder
- der Abstand zwischen der Bildfläche (7) und einem bei der Aufnahme verwendeten Objektiv (4), und/oder
- die Blendeneinstellung, und/oder
- die Bewegungsgeschwindigkeit des spaltförmigen Belichtungsschlitzes (6), und/oder
- die Aufnahmebrennweite.
